# EUROPÄISCHE PATENTSCHRIFT

(11) **EP 0 770 518 B1**
(45) Veröffentlichungstag und Bekanntmachung des Hinweises auf die Patenterteilung: **06.03.2002**
(21) Anmeldenummer: 96116466.2
(22) Anmeldetag: 15.10.1996
(51) Int. Cl.: B60N 2/48

(54) **Einstellbare Kopfstützen-Führungsvorrichtung**
Adjustable headrest guide arrangement
Dispositif de guidage d'un appui-tête réglable

(30) Priorität: 26.10.1995 US 548433
(43) Veröffentlichungstag der Anmeldung: 02.05.1997
(73) Patentinhaber: A. Raymond & Cie, F-38028 Grenoble-Cédex (FR)
(72) Erfinder: Clough, Malvyn J.L., Rochester Hills, Michigan 48307 (US); Lanore, Larry J., New Haven, Michigan 48048 (US); Stephens, Robert J., Clarkston, Michigan 48346 (US); D Arnal, Thibault Martin, F-38220 Vizille (FR)
(74) Vertreter: Kirchgaesser, Johannes, Dipl.-Ing.

(56) Entgegenhaltungen:
- GB-A- 2 065 816
- US-A- 4 604 777
- US-A- 4 976 493
- US-A- 5 080 437
- US-A- 5 156 440

## Beschreibung

Die Erfindung bezieht sich auf eine einstellbare Führungsvorrichtung für eine mit Querrillen versehenen Haltestange einer Kopfstütze.

Derartige Führungsvorrichtungen sind beispielsweise aus der US 5 080 437 C2 bekannt. Die Führungsvorrichtung besitzt eine Hülse aus einem Stück zur Führung einer Haltestange für die Kopfstütze eines Auto-sitzes. Die Führungshülse beinhaltet integrierte Sperrklauen, welche sich auf der Haltestange bewegen, um Reibungskraft auszuüben. Die Klauen rasten in entspre-chende Kerben auf der Stange in selbstsichernder Weise ein, um die unbeabsich-tigte Entfernung des Kopfstützen-Systems von der Sitzlehne zu verhindern. Die Klauen üben eine Reibungskraft auf die Kopfstützen-Haltestange aus, um die stufen-lose Einstellung der Kopfstütze zu ermöglichen. Diese Führungsvorrichtung ist jedoch aus einem Stück geformt, und wenn die Klauen ihre Andruckkraft verlieren, muß das gesamte System ausgewechselt werden. Außerdem ist es nicht möglich, die Kopfstütze auf einfache Weise vom Sitz für Wartungsarbeiten an der Kopfstütze oder am Sitz zu entfernen.

Eine Vorrichtung mit den Merkmalen des Oberbegriffs des Anspruchs 1 ist z.B. durch die US-A-4 604 777 bekannt.

Aufgabe der Erfindung ist es, eine sicher einstellbare Kopfstützenführung zu schaffen, welche eine einfache Herstellung und schnelle Änderung der Position der Kopfstütze erlaubt und sich für Reparaturen des Sitzes oder der Kopfstütze oder der Führungsvorrichtung leicht auseinandernehmen läßt.

Diese Aufgabe wird nach der Erfindung mit den Merkmalen des Anspruchs 1 gelöst.

Die Drucktasten können aufeinander zubewegt werden, wobei sich zwischen den Drucktasten und den Sperrgliedern Federstege befinden, um die Bewegung der Haltestange und Kopfstütze zu erlauben. Die Sperrglieder haben Rastkanten, die in die Rillen der Haltestange eingreifen und diese mittels Formschluß feststellen und gegen eine ringförmige Arretierung am Ende der Haltestange anschlagen, um ein unbeabsichtigtes Entfernen der Haltestange zu verhindern. Falls notwendig, wird der Körper zum Auswechseln der Tülle durch die Entfernung der Kappe und Sperrfeder zugänglich.

ObigeZiele, Besonderheiten und Vorteile der Erfindung werden durch die nachfolgende Beschreibung verdeutlicht, wobei auf die beigefügte Zeichnung Bezug genommen wird. Es zeigt
- Fig. 1: die Seitenansicht des Führungsvorrichtungssystems gemäß der Erfindung und der Haltestange einer Kopfstütze, welche in einer Autositzlehne angebracht ist,
- Fig. 2: einen Perspektivschnitt mit Einzelteilen der Führungsvorrichtung gemäß der Erfindung,
- Fig. 3: einen Schnitt durch den oberen Teil des Körpers, der Tülle, der Sperrfeder und der Kappe gemäß der Erfindung,
- Fig. 4: eine Draufsicht der Sperrfeder, die eine Haltestange der Kopfstütze feststellt,
- Fig. 5: eine Draufsicht der Sperrfeder mit zusammengedrückten Drucktasten, um die Sperrflansche von der Haltestange zu entfernen, und
- Fig. 6: einen Querschnitt des Sperrsystems, entsprechend der Schnittlinie VI - VI in Fig. 3,

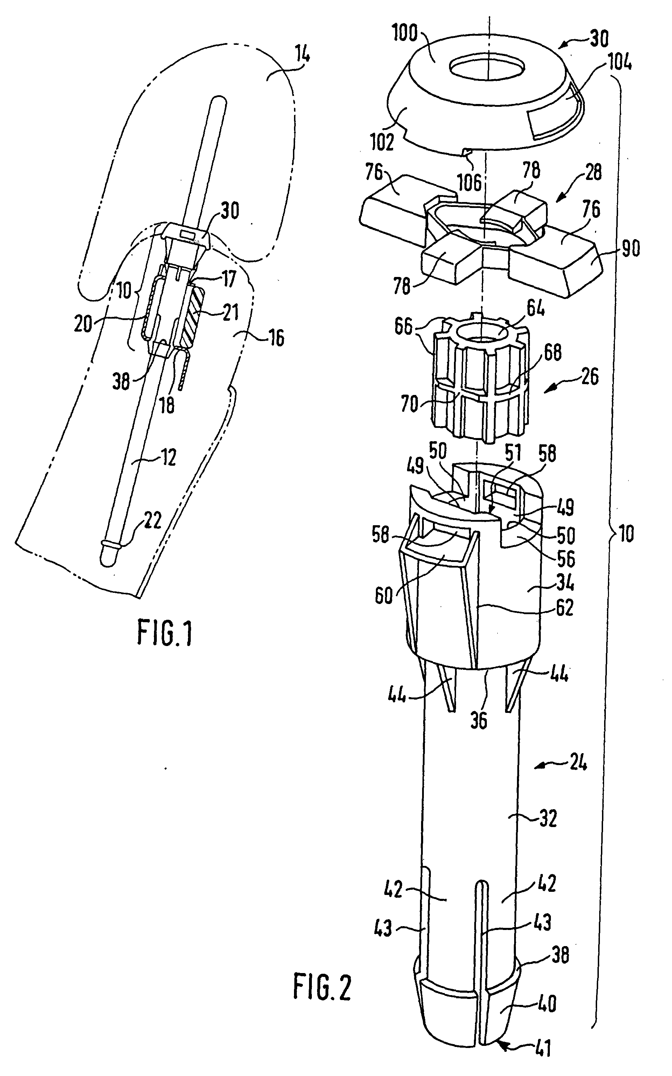

Zuerst wird auf Fig. 1 Bezug genommen, wo eine Führungsvorrichtung 10 für eine handelsübliche Haltestange 12 einer Kopfstütze 14 in ihrer Stellung in einer Rückenlehne 16 eines Fahrzeugsitzes gezeigt wird. Das Führungsvorrichtung 10 ist in Öffnungen eingebaut, welche in den Halterungen 17, 18 einer Klammer 20 ausgebildet sind.

Die Klammer ist an einer Platte 21 befestigt, welche innerhalb der Rückenlehne 16 angebracht ist. Die Kopfstütze 14 kann von einer einzelnen Stange 12 oder einem Paar Stangen gehalten werden. Die Stange 12 besitzt hierbei einen runden Querschnitt und eine ringförmige Arretierung 22 am unteren Ende. Außerdem ist sie über die Verschiebelänge mit vielen Rastrillen 13 versehen, welche alle den gleichen Abstand voneinander haben. Die Haltestange 12 wird von der Führungsvorrichtung 10, welche die Bewegung der Stange 12 führt und die Kopfstütze 14 vertikal in der gewünschten Höhe über der Rücklehne 16 einstellt, längsverschieblich aufgenommen.

Wie aus Fig. 2 ersichtlich, enthält die Kopfstützen-Führungsvorrichtung 10 gemäß der Erfindung einen verlängerten Körper 24, eine Elastomer-Tülle 26, eine Sperrfeder 28 und eine Kappe 30. Der verlängerte Körper 24 beinhaltet einen zylindrischen unteren Teil 32 und ein oberes Trommelteil 34. In der bevorzugten Gestaltung ist der Körper 24 in einem Teil aus mit Talkum gefülltem Polypropylen geformt. Vom Ende 41 des unteren Teiles 32 erstreckt sich ein konisch zusammenlaufendes Teil 40 zu einer ringförmigen Oberfläche 38. Vier Schlitze 43 erstrecken sich durch das konische Teil 40 in den zylindrischen Teil 32 und bilden Finger 42, die nach innen zusammengedrückt werden können, um das Einfügen des Körpers 24 durch die Öffnungen in den Halterungen 17 und 18 zu ermöglichen. Vier Rippen 44 befinden sich zwischen der Schulter 36 des Trommelteiles 34 und dem unteren Teil 32 und werden in nicht gezeigten Schlitzen aufgenommen, die in der Halterung 17 ausgebildet sind, um die Rotation des Körpers 24 in der Halterung 17 zu verhindern.

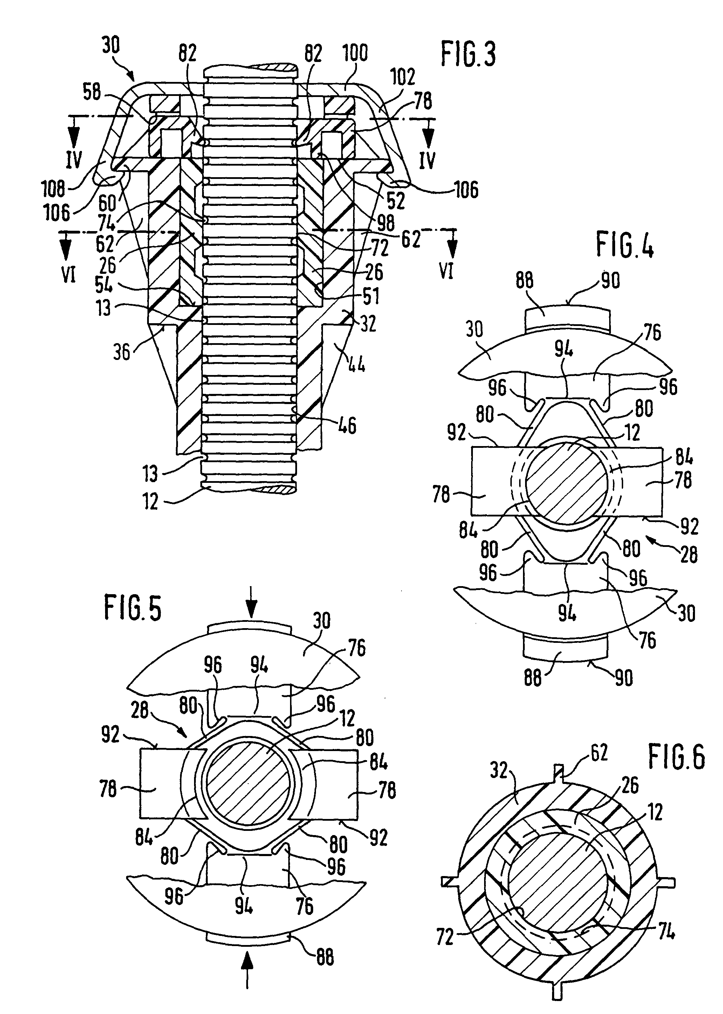

Fig. 3 zeigt eine zylindrische Bohrung 46 im unteren Teil 32 des Körpers 24, die dazu dient, die Stange 12 zur axialen Verschiebung aufzunehmen. Eine ovale Senkbohrung 51 erstreckt sich vom oberen Ende 52 des Trommelteils 34 bis zu einer Ringfläche 54, um die Tülle 26 aufzunehmen. Fig. 2 zeigt, daß die Senkbohrung 51 ein Paar flache Wandflächen 49 und ein Paar gegenüberliegende gebogene Wandflächen 50 besitzt.

Ein Paar diametral gegenüberliegende Aussparungen 56 und ein Paar rechteckige Öffnungen 58 sind im oberen Ende 52 des Trommelteiles ausgebildet, um die Sperrfeder 28 aufzunehmen, was unten ausführlicher beschrieben wird. Fig. 3 zeigt, daß sich zwei Rippen 60 zur Aufnahme der Kappe 30 radial von der Ober-fläche des Trommelteils 34 nach außen erstrecken. Jede Rippe 60 wird durch zwei dreieckige Rippen 62 seitlich gestützt.

Fig. 2 zeigt ferner, daß die Tülle 26 eine Durchgangsbohrung 64 mit einer Vielzahl von achsparallel ausgerichteten radialen Rippen 66 besitzt. Eine umlaufende Rippe 68 stützt die radialen Rippen 66. Ein Paar diametral gegenüberliegende flache Oberflächen 70 werden durch die abgeflachten Teile der Rippen 66, 68 gebildet. Der Querschnitt der Tülle ist oval und entspricht der Form der Senkbohrung 51 des Trommelteiles 34.

Fig. 3 und 6 zeigen, daß die Durchgansbohrung 64 der Tülle 26'eine innere Oberfläche 72 besitzt, welche etwas kleiner ist als der äußere Durchmesser der Stange 12. Ringförmige Rillen 74 sind an der inneren Oberfläche 72 der Senkbohrung 51 ausgebildet. Die von der Tülle 26 auf die Stange 12 ausgeübte Reibkraft hängt von der Größe der Oberfläche der Tülle 26 ab, die sich im Kontakt mit der Stange 12 befindet. Die Tülle 26 ist aus einem elastischen Kunststoff geformt.

Fig. 4 und 5 zeigen, daß die Sperrfeder 28 ein Paar gegenüberliegende Drucktasten 76 besitzt, welche mit einem Paar Sperrgliedern 78 durch vier Federstege 80 verbunden sind. Die Sperrfeder 28 ist in einem Stück aus elastomerem Material geformt.

Fig. 3, 4 und 5 zeigen, daß jedes Paar der Sperrglieder 78 einen im allgemeinen rechteckigen Querschnitt besitzt und ein sich verjüngendes inneres Ende 82 mit einer gebogenen Kante 84 aufweist. Der Radius des Bogens der Kante 84 ist gleich dem Radius der Stange 12. Das innere Ende 82 ist verjüngt, um das Eindringen in die Rastrillen 13 der Stange 12 zu erlauben.

Fig. 2, 4 und 5 zeigen, daß jede Drucktaste 76 einen rechteckigen Querschnitt besitzt, welcher der Form der rechteckigen Öffnung 58 des Trommelteils 34 entspricht. Die Drucktaste 76 hat ein äußeres Ende 88, welches eine winklige Stirnseite 90 besitzt und ein inneres Ende mit einem Mittelteil 94, welches sich zwischen zwei angewinkelte Anschlagsflächen 96 befindet.

Fig. 4 und 5 zeigen, daß sich die Federstege 80 in einer V-ähnlichen Anordnung von den Seitenoberflächen 92 der Sperrglieder 78 zum Mittelteil 94 der Drucktasten erstrecken. Jeder Federsteg 80 verbindet eine Drucktaste 76 mit einem Sperrglied 78, jedes Sperrglied 78 ist mit beiden Drucktasten 76 verbunden. Die Federstege 80 laufen von den Anschlagsflächen 96, welche im wesentlichen parallel zu den entsprechenden Federstegen 80 stehen, nach innen auseinander.

Die Sperrfeder 28 ist auf dem Körper 24 angebracht, wobei die Drucktasten 76 in den Aussparungen 56 liegen und die Sperrglieder 78 so positioniert sind, daß sie sich entgegengesetzt innerhalb der rechteckigen Öffnungen 58 bewegen. Um die Sperrfeder 28 im Körper 24 zu installieren, werden die Sperrglieder 78 zusammengedrückt und die Drucktasten 76 in die Aussparungen 56 der Trommel 34 eingesetzt. Wenn die Sperrfeder 28 eingesetzt worden ist, werden die Sperrglieder 78 freigegeben, und die Federstege 80 drücken die Sperrglieder 78 nach außen in die viereckigen Öffnungen 58 des Trommelteils 34. Wenn sich die Sperrfeder 28 in ihrer Position sich befindet, erstreckt sich ein Flansch 98 des Sperrgliedes 78 nach unten, um die Tülle 26 festzustellen.

Wenn sich die Sperrfeder 28 in der normalen Position befindet, wie aus Fig. 4 ersichtlich ist, sind die gebogenen Kanten 84 der Sperrglieder 78 mit den Rillen 13 der Stange 12 im formschlüssigen Kontakt. Fig. 5 zeigt, daß sich beim Zusammendrücken der Drucktasten 76 die Sperrglieder 78 auseinander bewegen und den Kontakt mit den Rillen 13 der Stange 12 aufgeben. Dies erlaubt eine freie Bewegung der Haltestange 12. Die Innenbewegung der Drucktasten 76 ist durch den Kontakt der Federstege 80 mit der Anschlagfläche 96 begrenzt.

Wenn die Stange 12 genügend weit nach oben herausgezogen wird, werden die Sperrglieder 78 durch die Federstege 80 nach innen gedrückt, so daß sich die inneren Enden 82 der Sperrglieder 78 gegen die Arretierung 22 bewegen, um die Stange 12 gegen unbeabsichtigtes Herausziehen aus der Rückenlehne zu sperren. Fig 5 zeigt, daß die Drucktasten 76 zusammengedrückt werden können, um die inneren Enden 82 von der ringförmigen Arretierung 22 der Stange 12 zu lösen, damit die Stange 12 von der Rückenlehne entfernt werden kann.

Die Kappe 30 hat, wie aus Fig. 2 und 3 ersichtlich, die Form einer invertierten Pfanne mit einer radialen Oberfläche 100 und einer dazu abgewinkelten Seitenfläche 102. Die Seitenfläche 102 hat zwei rechteckige, diametral gegenüberliegende Öffnungen 104, die so geformt sind, daß sie die Drucktasten 26 aufnehmen können. Die Stirnseite 90 der Drucktaste 76 ist hierbei so angewinkelt, daß sie der Neigung der Seitenfläche 102 entspricht. Zwei gegenüberliegende Flansche 106 erstrecken sich vom unteren Rand 108 der Kappe 30 nach innen und sind so angebracht, daß sie an der Unterseite der Rippe 60 der Trommel 34 einrasten.

Die Führungsvorrichtung 10 kann, wie in Fig. 1 gezeigt, zusammengebaut und dann in der Rückenlehne installiert werden. Die Schultern 36 und 38 des Körpers 24 rasten in die Halterungen 17 und 18 ein, um die Führungsvorrichtung 10 in ihrer Stellung zu befestigen. Wenn die Kappe 30 in die Rückenlehne eingebaut worden ist, ragt sie oben über die Rückenlehne 16 hinaus, so daß die Drucktasten 76 erreichbar sind.

Damit ist ein System zur Führung einer Stange, die eine Kopfstütze hält, gegeben, welches eine problemlose Einstellung und Änderung der Position der Kopfstütze erlaubt und vor unbeabsichtigter Entfernung der Stange von der Rückenlehne schützt. Weiterhin erlaubt das System die Entfernung der Stange von der Rückenlehne, wenn dies gewünscht wird, durch Zusammendrücken der Drucktasten. Letztlich erlaubt das System einen einfachen Ersatz der Reibungstülle für den Fall, daß die Tülle die gewünschte Bremskraft durch Reibung verlieren sollte.

## Patentansprüche

1. Führungsvorrichtung für eine mit Querrillen versehene Haltestange einer Kopfstütze aufweisend einen in einer Rückenlehne ( 16 ) fest eingebauten verlängerten Körper ( 24 ), der eine zylindrische Bohrung ( 46 ) zur Aufnahme der Haltestange (12) aufweist, ferner eine Kappe ( 30 ), die auf dem Körper ( 24 ) aufgesetzt ist und die ein Loch hat, um die Haltestange ( 12) aufzunehmen, sowie eine Sperrfeder ( 28 ) mit einem Sperrglied (78), das eine Kante ( 84 ) besitzt, welche in die Rillen ( 13 ) der Haltestange (12) formschlüssig einrastet, und die zwei Drucktasten ( 76 ) aufweist, welche von einer normalen Rastposition, in der die Kante ( 84 ) die Haltestange ( 12) feststellt, in eine Freigabeposition bewegt werden können, in der die Kante ( 84 ) aus der Rille ( 13 ) der Haltestange (12) ausrastet, **dadurch gekennzeichnet, daß** die Kappe (30) lösbar mit dem Körper (24) verbunden ist, daß die Sperrfeder (28) zwei Sperrglieder (78) aufweist und daß der körper (24) eine Senkbohrung (51) zur Aufnahme einer elastomeren Tülle ( 26 ) aufweist, die eine Durchgangsbohrung ( 64 ) hat, um die Haltestange (12) aufzunehmen.

2. Führungsvorrichtung nach Anspruch 1, **dadurch gekennzeichnet, daß** die besagte Senkbohrung ( 51 ) und die besagte Tülle ( 26 ) einen aufeinander abgestimmten, ovalen Querschnitt haben.

3. Führungsvorrichtung nach Anspruch 1, **dadurch gekennzeichnet, daß** die den besagten Sperrgliedern ( 78 ) zugeordneten zwei Drucktasten (76) mit den Sperrgliedern ( 78 ) durch Federstege ( 80) verbunden sind.

4. Führungsvorrichtung nach Anspruch 1 und 3, **dadurch gekennzeichnet, daß** der besagte Körper ( 24 ) Aussparungen ( 56 ) besitzt, in die die besagten Drucktasten (76) hineingeschoben werden.

5. Führungsvorrichtung nach Anspruch 4, **dadurch gekennzeichnet , daß** der besagte Körper ( 24 ) Öffnungen ( 58 ) besitzt, die einen Teil der besagten Sperrglieder ( 78 ) aufnehmen und in axialer Richtung abstützen.

## Claims

1. A guide device for a mounting bar of a head support, the mounting bar being provided with transverse grooves, comprising a prolonged body (24) which is fixedly installed in a backrest (16) and which has a cylindrical bore (46) for receiving the mounting bar (12), furthermore a cap (30) which is fitted on the body (24) and which has a hole for receiving the mounting bar (12), and a locking spring (28) with a locking member (78) which has an edge (84) which engages in positively locking relationship into the grooves (13) of the mounting bar (12) and which has two pushbuttons (76) which can be moved from a normal retaining position in which the edge (84) fixes the mounting bar (12) into a release position in which the edge (84) is disengaged from the groove (13) of the mounting bar (12), **characterised in that** the cap (30) is releasably connected to the body (24), that the locking spring (28) has two locking members (78) and that the body (24) has a countersink bore (51) for receiving an elastomer bush (29) having a through bore (64) to receive the mounting bar (12).

2. A guide device according to claim 1 **characterised in that** the countersink bore (51) and the bush (26) are of a mutually matched oval cross-section.

3. A guide device according to claim 1 **characterised in that** the two pushbuttons (76) associated with the locking members (78) are connected to the locking members (78) by spring bars (80).

4. A guide device according to claim 1 and claim 3 **characterised in that** the body (28) has recesses (56) into which the pushbuttons (76) are pushed.

5. A guide device according to claim 4 **characterised in that** the body (24) has openings (58) which receive a part of said locking members (78) and support same in the axial direction.

## Revendications

1. Dispositif de guidage d'une tige de retenue, munie de cannelures transversales, d'un appui-tête, comprenant un élément de grande longueur (24) monté solidaire d'un dossier (16), qui comporte un alésage cylindrique (46) destiné à recevoir la tige de retenue (12), en outre une calotte (30) qui est accrochée sur l'élément (24) et qui comporte une ouverture pour l'introduction et le passage de la tige de retenue (12), ainsi qu'un ressort d'arrêt (28) muni d'un organe de blocage (78) qui comporte une arête (84) qui vient s'insérer en prise d'encastrement dans les cannelures (13) de la tige de retenue (12), par l'action mécanique résultant de leur forme, et qui comprend deux éléments poussoirs (76) qui peuvent être déplacés par pression d'une position d'accrochage normale, dans laquelle l'arête (84) immobilise en position la tige de retenue (12), dans une position de dégagement, dans laquelle l'arête (84) est libérée de sa position d'encastrement dans la cannelure (13), **caractérisé en ce que** la calotte (30) est assemblée avec l'élément (24) avec une possibilité de dissociation ultérieure, **en ce que** le ressort d'arrêt (28) comporte deux organes de blocage (78) et **en ce que** l'élément (24) comporte un alésage fraisé (51) destiné à recevoir une douille en élastomère (26) qui comporte une ouverture débouchante (64) pour le passage de la tige de retenue (12).

2. Dispositif de guidage selon la revendication 1, **caractérisé en ce que** ledit alésage fraisé (51) et ladite douille (26) ont chacun une section transversale de forme ovale, qui sont respectivement adaptées l'une à l'autre.

3. Dispositif de guidage selon la revendication 1, **caractérisé en ce que** les deux éléments poussoirs (76) correspondant auxdits organes de blocage (78) sont reliés aux organes de blocage (78) par des barrettes entretoises élastiques (80)

4. Dispositif de guidage selon les revendications 1 et 3, **caractérisé en ce que** ledit élément (24) comporte des évidements (56) dans lesquels lesdits éléments poussoirs (76) peuvent être poussés.

5. Dispositif de guidage selon la revendication 4, **caractérisé en ce que** ledit élément (24) présente des ouvertures (58) dans lesquelles vient se loger une partie desdits organes de blocage (78) et qui assurent à ces derniers un appui dans le sens axial.
